# EUROPÄISCHE PATENTSCHRIFT

(11) **EP 1 561 982 B1**
(45) Veröffentlichungstag und Bekanntmachung des Hinweises auf die Patenterteilung: **23.05.2007**
(21) Anmeldenummer: 05405048.9
(22) Anmeldetag: 31.01.2005
(51) Int. Cl.: F16K 27/10, F16K 27/02, F16K 1/10, B21D 26/02

(54) **Armatur**
Fitting
Raccord

(30) Priorität: 03.02.2004 CH 1622004
(43) Veröffentlichungstag der Anmeldung: 10.08.2005
(73) Patentinhaber: R. Nussbaum AG, 4601 Olten (CH)
(72) Erfinder: Bobst, Urs, 4703 Kestenholz (CH); Zeiter, Patrik, 4853 Riken (CH); Gysin, Balthasar, 4600 Olten (CH)
(74) Vertreter: Roshardt, Werner Alfred

(56) Entgegenhaltungen:
- DE-A1- 19 816 244
- DE-A1- 19 954 456
- FR-A- 891 961
- US-A- 3 681 960
- US-A- 6 026 835
- US-B1- 6 202 460

## Beschreibung

### Technisches Gebiet

Die Erfindung betrifft eine Armatur mit einem Ventil für die Kontrolle eines Fluids in einem Leitungssystem, insbesondere ein Absperrventil, ein Regelventil, einen Rückflussverhinderer oder ein Zirkulationsventil, mit einem Gehäuse, insbesondere aus Edelstahl, mit mindestens zwei Leitungsanschlüssen, wobei ein Ventilsitz des Ventils direkt am Gehäuse ausgeformt ist. Die Erfindung betrifft ferner ein Gehäuse für die Armatur sowie ein Verfahren zur Herstellung der Armatur.

### Stand der Technik

Armaturen mit mehreren Leitungsanschlüssen und einem Ventil für die Kontrolle eines Fluids in einem Leitungssystem dienen zum Absperren und Regeln von Flüssigkeiten oder Gasen, welche durch sie hindurch strömen. Gegenüber Armaturen aus anderen Materialien wie Messing oder Rotguss weist Edelstahl einige Vorteil auf, wie z. B. eine hohe Korrosionsbeständigkeit und eine geringe Gefahr der chemischen Kontamination des geführten Fluids. Dies ist beispielsweise bei Leitungen für Trinkwasser oder in der Lebensmittelindustrie wichtig. Herkömmlich werden die Armaturengehäuse aus Edelstahl in einem Feingussverfahren hergestellt. Im Zuge eines solchen Verfahrens muss jedoch eine Reihe von komplizierten Arbeitsschritten ausgeführt werden, das Schmelzen hat einen grossen Energiebedarf, und die Ausschussquote sowie der Materialeinsatz und der Arbeitsaufwand sind typischerweise hoch. All dies führt zu hohen Kosten und entsprechend teuren Produkten.

Aus der DE 198 56 553 A1 (Friedrich Grohe) ist eine Wasserarmatur bekannt mit einem im Wesentlichen T-förmigen Gehäuse, in welchem eine Ventilkartusche gehalten ist, welche über mehrere innerhalb des Gehäuses geführte Schlauchleitungen mit Zuleitungen für Kalt- und Warmwasser sowie mit einem Ausguss verbunden ist. Das dünnwandige Edelstahlgehäuse ist durch Hydroformung hergestellt.

Hydroformung stellt eine Alternative zum Feinguss her. Bei solchen Verfahren wird ein Rohrformteil in einer Presse fixiert und mit einem flüssigen Druckmedium befüllt. Das Medium wird mit Druck beaufschlagt, wodurch sich eine Verformung des Formteils ergibt, welche durch die Form der Werkzeuge in der Presse bestimmt ist. Gegenüber Gussverfahren ist die Hydroformung vor allem bei grossen Stückzahlen preiswert, da eine geringere Zahl von Arbeitsschritten ausgeführt werden muss und da der Formteil nicht erhitzt werden muss, so dass weniger Energie aufgewendet werden muss. Die Ausschussquote ist aufgrund der genau kontrollierbaren Prozessbedingungen sehr gering.

Allerdings dient das in der DE 198 56 553 A1 gezeigte Armaturengehäuse nur zur Aufnahme eigentlich unabhängig davon funktionierender Bauelemente, es hat keine wasserführende Funktion, und das Ventil ist als einsetzbare Kartusche ausgebildet. Der Aufbau der Armatur ist entsprechend kompliziert und teuer.

In der US 6,202,460 B1 (Tubes et Formes) ist ein Verfahren zur Hydroformung eines Y-förmigen Rohranschlussstücks aus Metall beschrieben. Dazu wird in an sich bekannter Weise einem geraden Rohr in einer Matrize eine Hydraulikflüssigkeit über Leitungen unter hohem Druck zugeführt und das Rohr gleichzeitig durch zwei Kolben entlang einer Achse zusammengepresst. Dies führt dazu, dass das Rohr partiell in eine seitliche, schräg abzweigende Ausnehmung der Matrize fliesst. Die Formung dieses abzweigenden Rohrteils wird durch einen Gegenkolben kontrolliert, der allmählich in die Ausnehmung zurückgezogen wird und dessen Stirnfläche bezüglich der Achse des abzweigenden Rohrteils aus einer abgewinkelten, zur Seitenfläche des Hauptteils des Rohranschlussstücks parallelen Anfangsstellung in eine senkrechte Endstellung drehbar ist.

Mit diesem Verfahren lässt sich also ein hydrogeformtes, wasserführendes Rohranschlussstück herstellen.

In der DE 199 54 456 A1 (Schell GmbH) wird ein Eckventil beschrieben, welches im Wesentlichen T-förmig ausgebildet ist. Ein einteiliges hydrogeformtes Edelstahlgehäuse weist einen Anschlussschaft, einen Abgangsschaft und ein Absperrelement auf. Der Anschluss- und der Abgangsschaft sind in einem rechten Winkel zueinander angeordnet. Das Absperrelement sitzt im dazwischenliegenden, zum Anschlusselement diametral angeordneten Schaft. Bei einer der dargestellten Ausführungsformen ist ein Ventilsitz in Form einer umlaufenden Innenwulst im Anschlussschaft ausgebildet.

Das Eckventil beruht auf einem einfachen T-artig hydrogeformten Rohrelement und ist entsprechend einfach aufgebaut und kostengünstig. Eckventile sind aber nur für bestimmte Anwendungen geeignet und setzen dem Fluidstrom selbst bei vollständig geöffnetem Ventil einen hohen Widerstand entgegen. Andersartige Armaturen lassen sich nicht in der dargestellten Weise fertigen.

Die FR 891 961 (V. Pantenburg) beschreibt eine Armatur mit einem Zugangs- und einem Abgangsrohransatz, sowie einem schräg abzweigenden Servicestück zur Aufnahme eines Absperrventils, wobei all diese Teile an einem Mittelstück angeschweisst bzw. mit Briden befestigt sind. Am Mittelstück ist auch der Ventilsitz für das Absperrventil ausgebildet. Das Mittelstück ist ein Gussteil, während die weiteren Stücke aus (korrosionsarmem) Walzstahl gefertigt sind.

Selbst für den Aufbau dieser verhältnismässig einfach aufgebauten Armatur werden drei Rohrteile benötigt. Entsprechend können noch kompliziertere Armaturen zwar hergestellt werden, bedingen aber einen noch aufwändigeren Aufbau.

### Darstellung der Erfindung

Aufgabe der Erfindung ist es, eine dem eingangs genannten technischen Gebiet zugehörende Armatur zu schaffen, welche kostengünstig, einfach aufgebaut und vielseitig einsetzbar ist.

Die Lösung der Aufgabe ist durch die Merkmale des Anspruchs 1 definiert. Gemäss der Erfindung ist das Gehäuse durch mindestens zwei Teile gebildet, die durch Hydroformung aus Rohrformteilen hergestellt und fluiddicht zusammengefügt, insbesondere geklebt, gebördelt oder aufgeschrumpft, bevorzugt verschweisst, sind. Einer der mindestens zwei Teile weist einen Durchbruch in einer Rohrwand auf, und eine Umrandung des Durchbruchs bildet den Ventilsitz. Der Durchbruch dient so als Durchflussöffnung bei geöffnetem Ventil. Der Bereich der Umrandung kann bereits im Rahmen des Hydroformungsprozesses passend vorgeformt werden, z. B. indem eine Stufe oder eine Vertiefung eingeformt wird.

Dadurch, dass das Gehäuse aus zwei hydrogeformten Teilen zusammengesetzt ist, lassen sich Armaturen mit einem typbedingt komplizierteren Aufbau als beispielsweise einfache Eckventile herstellen, ohne dass auf andere Verfahren (wie z. B. den Feinguss) ausgewichen werden muss. Ein Durchbruch kann frei angeordnet werden und erlaubt so die flexible Ausbildung von Ventilsitzen, welche nicht entlang der Rohrwand der Rohrformteile ausgebildet sind. Fluiddichte Schweissverbindungen lassen sich kostengünstig und in sehr guter Qualität herstellen, die Vorteile der Hydroformung, insbesondere die tiefen Kosten bei grossen Serien, bleiben also erhalten. Durch die Ausbildung des Ventilsitzes als integrale Ausformung eines der mindestens zwei hydrogeformten Teile erübrigen sich zusätzliche Einsätze, wodurch bei der Herstellung der Armatur weitere Kosten eingespart werden können. Als Werkstoff für die Rohrformteile sind neben nichtrostendem Edelstahl auch Aluminium bzw. Aluminiumlegierungen, Kupfer bzw. Kupferlegierungen oder Titan bzw. Titanlegierungen geeignet.

Eine erfindungsgemässe Armatur kann insbesondere als Absperrventil, Regelventil, als Rückflussverhinderer oder als Zirkulationsventil ausgebildet sein. Auch kombinierte Rückflussverhinderer (KRV) mit Absperrfunktion sind herstellbar. Erfindungsgemässe Armaturen sind beispielsweise in der Trinkwasserversorgung und -verteilung, in der Gasversorgung, in Heizungskreisläufen oder in Leitungssystemen in der Industrie einsetzbar.

Mit Vorteil ist der Ventilsitz bei einer Verbindungsstelle der mindestens zwei Teile angeordnet. Der Ventilsitz kann dabei aus einem der Teile allein oder durch beide Teile gemeinsam gebildet sein, wobei die Schweissverbindung zwischen den beiden Teilen in der Regel einfacher herstellbar ist, wenn der Ventilsitz nur an einem der Teile ausgebildet ist. Bei der Verbindungsstelle steht ein grösserer Spielraum an Gestaltungsmöglichkeiten zur Verfügung als bei der Ausbildung von Ventilsitzen innerhalb der Teile, ohne dass dadurch ein aufwändigerer Hydroformungsprozess notwendig wird.

Alternativ ist der Ventilsitz von der Verbindungsstelle entfernt angeordnet und z. B. als Einschnürung oder Verdickung des hydrogeformten Teils ausgeformt.

Vorzugsweise ist der Ventilsitz durch einen nach innen gezogenen Abschnitt eines der mindestens zwei hydrogeformten Teile gebildet. Diese Lösung ist einfach, mechanisch robust und kostengünstig herstellbar.

Alternativ kann der Ventilsitz von beiden Teilen gemeinsam ausgebildet sein oder als Verdickung am Endabschnitt eines der Teile.

Vorzugsweise ist direkt an einem der mindestens zwei Teile ein durch die Hydroformung erzeugtes Verbindungselement für eine Rohrleitung ausgeformt, insbesondere ein Presswulst für eine Pressverbindung. Integrierte Verbindungselemente (wie Presswülste, Gewinde oder Steckverbinder) haben den Vorteil, dass Leitungsrohre direkt am Armaturengehäuse befestigt werden können, ohne dass zusätzliche Fittinge benötigt werden. Werden die Verbindungselemente integral im Formungsprozess hergestellt, können gewisse Bearbeitungsschritte, wie z. B. das Schneiden von Gewinden, eingespart werden, wodurch der gesamte Herstellungsprozess schneller und kostengünstiger ablaufen kann.

Alternativ können die geformten Teile nachträglich mit einem Verbindungselement (z. B. einem Gewinde) versehen werden, oder die Verbindung zu den Leitungsrohren erfolgt mittels üblicher Fittinge.

Bevorzugt umfasst die Armatur zwei diametral angeordnete Leitungsanschlüsse und einen dazwischen angeordneten, abzweigenden Rohrteil zur Aufnahme des Ventiloberteils. Die Armatur hat also eine sog. "Durchgangsform", bei welcher der Durchgangsquerschnitt im Gehäuse (und damit die Fliessrichtung des Mediums) in einer Ebene mit den Rohranschlussachsen liegt. Eine derartige Armatur weist einen niedrigen Strömungswiderstand auf und lässt sich auch nachträglich problemlos in eine gerade verlaufende Leitung einbauen.

Alternativ sind die Anschlüsse nicht diametral angeordnet, sondern sind versetzt, beispielsweise um 90°, so dass ein Eckventil gebildet werden kann.

Mit Vorteil bildet der abzweigende Rohrteil einen Schrägsitz für den Ventiloberteil. Der Rohrteil zweigt also beispielsweise in einem Winkel von 45° von der geraden Rohrverbindung zwischen den beiden Leitungsanschlüssen ab. Schrägsitzventile (vor allem sogenannte "Freiflussventile") verursachen aufgrund des günstigen Strömungsverlaufes im Durchgangsquerschnitt wesentlich geringere Druckverluste als Geradsitz- oder Eckventile. Die Erfindung ermöglicht die Herstellung von Armaturengehäusen für Schrägsitzventile mittels eines Hydroformungs-Verfahrens. Beim erfindungsgemässen Aufbau der Armatur lässt sich der Ventilsitz für ein Schrägsitzventil mit besonders geringem Aufwand an einer Verbindungsstelle der hydrogeformten Teile ausbilden.

Alternativ kann ein um 90° abzweigender Rohrteil eine Aufnahme für den Ventiloberteil einer Geradsitzarmatur bilden.

Bei einer bevorzugten Ausführung der Erfindung mit zwei diametral angeordneten Leitungsanschlüssen und einem dazwischen angeordneten, abzweigenden Rohrteil zur Aufnahme des Ventiloberteils ist das Gehäuse der Armatur aus genau zwei Teilen gebildet, wobei ein erster Teil einen ersten der Leitungsanschlüsse und den abzweigenden Rohrteil und ein zweiter Teil einen zweiten der Leitungsanschlüsse bildet. Auf diese Weise lassen sich mit einer minimalen Anzahl von einzelnen geformten Teilen und nur einer einzigen umlaufenden Schweissnaht die gängigsten Armaturengehäuse aufbauen. Die Aufteilung in die zwei Teile wird so gewählt, dass die einzelnen Teile auf einfache Weise durch Hydroformung herstellbar sind, und mit Vorteil so, dass sie auf einfache Weise zusammengefügt, beispielsweise miteinander verschweisst, werden können und/oder dass unmittelbar an der Verbindungsstelle der Ventilsitz ausgebildet werden kann.

Bei einer anderen bevorzugten Ausführung der Erfindung mit zwei diametral angeordneten Leitungsanschlüssen und einem dazwischen angeordneten, abzweigenden Rohrteil zur Aufnahme des Ventiloberteils ist das Gehäuse der Armatur aus genau drei Teilen gebildet, wobei ein erster Teil einen ersten der Leitungsanschlüsse, ein zweiter, mittlerer Teil den abzweigenden Rohrteil und ein dritter Teil einen zweiten der Leitungsanschlüsse bildet. Aufgrund des zusätzlichen Teils wird eine grössere Flexibilität bei der Herstellung des Armaturengehäuses erreicht, insbesondere kann das Gehäuse aus hydrogeformten Teilen einer einfacheren Form zusammengesetzt werden, und/oder kompliziertere Formgebungen werden möglich. Wiederum wird die Aufteilung in die drei Teile möglichst so gewählt, dass sie auf einfache Weise zusammengefügt, beispielsweise miteinander verschweisst, werden können und dass unmittelbar an einer der Verbindungsstellen der Ventilsitz ausgebildet werden kann.

Bei einer weiteren bevorzugten Ausführung der Erfindung mit zwei diametral angeordneten Leitungsanschlüssen und einem dazwischen angeordneten, abzweigenden Rohrteil zur Aufnahme des Ventiloberteils ist das Gehäuse der Armatur aus genau vier Teilen gebildet, wobei ein erster Teil einen ersten der Leitungsanschlüsse, ein zweiter, mittlerer Teil den abzweigenden Rohrteil, ein dritter Teil einen zweiten der Leitungsanschlüsse und ein vierter Teil einen zusätzlichen Stutzen bildet. Der zusätzliche Stutzen dient beispielsweise zum Entleeren der Leitung und kann ein Entleerventil aufnehmen. Die vierteilige Ausführung ist besonders bei Armaturen mit einer komplexen Form von Vorteil und bietet eine noch weiter erhöhte Flexibilität bei der Herstellung.

Alternativ kann der vierteilige Aufbau auch bei kompliziert geformten Armaturengehäusen ohne zusätzlichen Stutzen von Vorteil sein.

Ein erster der mindestens zwei Teile kann aus einem Rohr einer ersten Wandstärke durch Hydroformung hergestellt sein, während ein zweiter der mindestens zwei Teile aus einem Rohr einer zweiten, unterschiedlichen Wandstärke durch Hydroformung hergestellt ist. Dadurch kann verschiedenen Bedürfnissen Rechnung getragen werden. Einerseits sollen in einige Bereiche des Armaturengehäuses Gewinde geschnitten werden, beispielsweise zur Aufnahme von Einsätzen wie z. B. Ventileinsätzen, andererseits soll der Materialbedarf minimiert werden, um die Kosten und das Gewicht der Armatur tief zu halten. Bei einem dreiteiligen Armaturengehäuse wie oben beschrieben, welches mit Pressanschlüssen versehen ist, kann beispielsweise der zweite, mittlere Teil aus einem Rohr mit einer grösseren Wandstärke gefertigt werden als die zwei äusseren Teile, so dass im mittleren Abschnitt ein Gewinde zur Aufnahme des Ventiloberteils geschnitten werden kann, ohne dass unnötig viel Material an den Anschlüssen verarbeitet werden muss, wo keine Gewinde notwendig sind.

Ein Gewinde kann auch in einen Gewindeteil eingeschnitten werden, welcher an einen der mindestens zwei hydrogeformten Teile fluiddicht angefügt, insbesondere angeklebt, gebördelt oder aufgeschrumpft, bevorzugt angeschweisst, ist. Der Gewindeteil kann in an sich bekannter Weise beispielsweise durch ein Gussverfahren hergestellt werden. Durch den Einsatz separater Gewindeteile lässt sich der Aufwand im Hydroformungsprozess vermindern, und es kann durchgehend mit Rohrformteilen geringer Wandstärke gearbeitet werden.

Alternativ kann der Hydroformungsprozess so eingerichtet werden, dass das verarbeitete Rohr so geformt wird, dass bei Gewindeabschnitten grössere Wandstärken resultieren als in anderen Abschnitten. Durch den Einsatz von Gewinden mit einer Feinsteigung kann zudem die benötigte Wandstärke reduziert werden.

Ein Gehäuse für eine erfindungsgemässe Armatur ist aus mindestens zwei Teilen, insbesondere aus Edelstahl, gebildet, welche durch Hydroformung hergestellt und fluiddicht zusammengefügt, insbesondere geklebt, gebördelt oder aufgeschrumpft, bevorzugt verschweisst, sind. Ein Ventilsitz ist direkt an einem der mindestens zwei Teile als Umrandung eines Durchbruchs in der Rohrwand ausgeformt.

Bei einem Verfahren zur Herstellung einer erfindungsgemässen Armatur werden zur Herstellung eines Gehäuses, insbesondere aus Edelstahl, mit mindestens zwei Leitungsanschlüssen mindestens zwei Teile durch Hydroformung hergestellt. Ein Durchbruch wird in einer Rohrwand eines der hydrogeformten Rohrformteile hergestellt, wobei eine Umrandung des Durchbruchs einen Ventilsitz bildet, der somit direkt an einem der zwei Teile ausgeformt ist. Anschliessend werden die mindestens zwei Teile so zusammengefügt, dass sich eine fluiddichte Verbindung ergibt, insbesondere geklebt, gebördelt oder aufgeschrumpft, bevorzugt verschweisst.

Aus der nachfolgenden Detailbeschreibung und der Gesamtheit der Patentansprüche ergeben sich weitere vorteilhafte Ausführungsformen und Merkmalskombinationen der findung.

### Kurze Beschreibung der Zeichnungen

Die zur Erläuterung des Ausführungsbeispiels verwendeten Zeichnungen zeigen:
- Fig. 1: Eine schematische Darstellung eines aus dem Stand der Technik bekannten Armaturengehäuses für ein Schrägsitzventil;
- Fig. 2: eine schematische Querschnittsdarstellung einer ersten Ausführungsform des erfindungsgemässen Armaturengehäuses, mit einem dreiteiligen Aufbau;
- Fig. 3: eine Schrägansicht der ersten Ausführungsform;
- Fig. 4: eine schematische Querschnittsdarstellung der ersten Ausführungsform mit eingesetztem Ventiloberteil;
- Fig. 5: eine schematische Querschnittsdarstellung einer zweiten Ausführungsform des erfindungsgemässen Armaturengehäuses, mit einem zweiteiligen Aufbau;
- Fig. 6: eine schematische Querschnittsdarstellung einer dritten Ausführungsform des erfindungsgemässen Armaturengehäuses, mit einem vierteiligen Aufbau;
- Fig. 7: eine schematische Querschnittsdarstellung einer vierten Ausführungsform des erfindungsgemässen Armaturengehäuses;
- Fig. 8: eine schematische Querschnittsdarstellung einer Variante der vierten Ausführungsform; und
- Fig. 9: eine schematische Querschnittsdarstellung einer fünften Ausführungsform des erfindungsgemässen Armaturengehäuses.

Grundsätzlich sind in den Figuren gleiche Teile mit gleichen Bezugszeichen versehen.

### Wege zur Ausführung der Erfindung

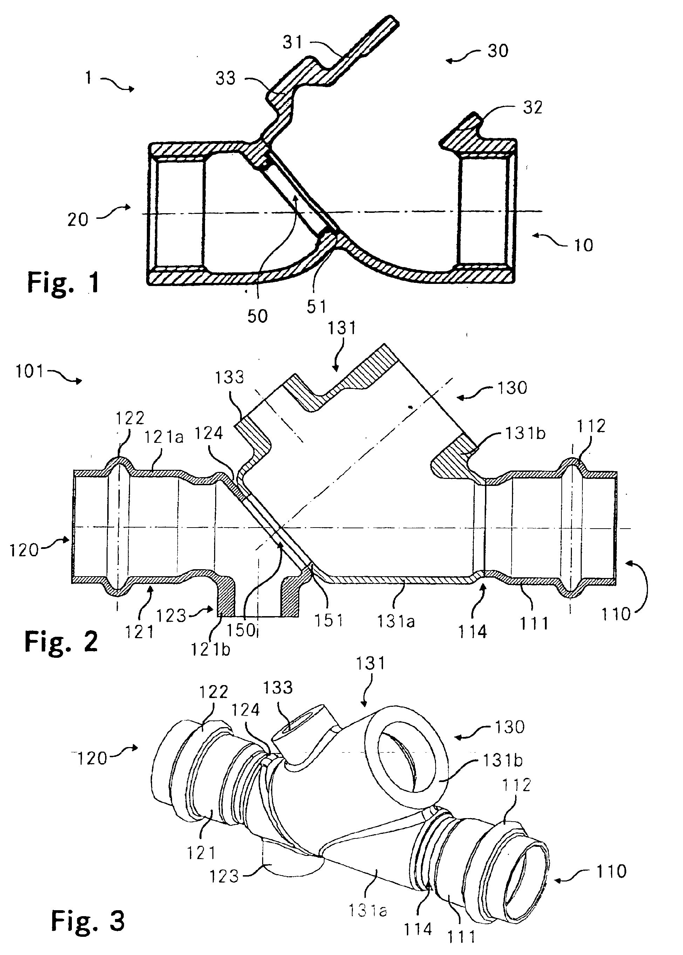

Die Figur 1 ist eine schematische Darstellung eines aus dem Stand der Technik bekannten Armaturengehäuses für ein Schrägsitzventil, wie es beispielsweise aus Edelstahl in einem Feingussverfahren hergestellt wird. Das Armaturengehäuse 1 weist zwei Leitungsanschlüsse 10, 20 auf, welche diametral, also entlang einer gemeinsamen Achse, angeordnet sind. Zwischen den Leitungsanschlüssen 10, 20 zweigt seitlich in einem Winkel von 45° ein mittlerer Abschnitt 31 ab, dessen freies Ende eine Aufnahme 30 für einen Ventiloberteil bildet. Dazu weist er unter anderem in seinem äusseren Bereich ein Innengewinde 32 auf. Fluchtend mit der Achse des Ventiloberteils ist innerhalb des Armaturengehäuses 1 ein kreisförmiger Fluiddurchlass 50 ausgespart, dessen Rand als Ventilsitz 51 ausgebildet ist. Ein Ansatz 33 für einen zusätzlichen Stutzen, z. B. für einen Entleerstutzen, ist seitlich am mittleren Abschnitt 31 vorbereitet.

Die Figur 2 ist eine schematische Querschnittsdarstellung einer ersten Ausführungsform des erfindungsgemässen Armaturengehäuses, mit einem dreiteiligen Aufbau; die Figur 3 zeigt eine Schrägansicht davon. Das Armaturengehäuse 101 weist zwei Leitungsanschlüsse 110, 120 auf, welche diametral angeordnet sind. Die Leitungsanschlüsse 110, 120 sind durch Rohrteile 111, 121 gebildet, welche nahe der freien Rohrenden auf ihrer Aussenseite Presswülste 112, 122 aufweisen. Auf der Innenseite bilden die Presswülste 112, 122 eine Nut, in welche ein O-Ring eingesetzt werden kann. Zur Herstellung einer fluiddichten Verbindung zwischen einem Leitungsrohr und der Armatur 101 wird das Leitungsrohr in die Rohrteile 111, 121 eingeführt und anschliessend von aussen her verpresst.

Zwischen den Leitungsanschlüssen 110, 120 zweigt seitlich in einem Winkel von ungefähr 45° ein mittlerer Rohrteil 131 ab, welcher an seinem Ende eine Aufnahme 130 für einen Ventiloberteil (also einen Schrägsitz) bildet. Fluchtend mit der Achse des abzweigenden mittleren Rohrteils 131 sind innerhalb des Armaturengehäuses 101 ein Fluiddurchlass 150 und ein ihn umgebender Ventilsitz 151 ausgebildet. Zusammen mit dem Fluiddurchlass 150 bilden die drei Rohrteile 111, 121, 131 einen im Wesentlichen freien und geraden Fluiddurchgang zwischen den beiden Leitungsanschlüssen 110, 120.

Zusätzliche Stutzen 133, 123 zweigen senkrecht seitlich vom mittleren Rohrteil 131 sowie vom zweiten Rohrteil 121 ab, wobei die Achsen dieser Stutzen 133, 123 in der von den Achsen der drei Rohrteile 111, 121, 131 aufgespannten Ebene liegen. Die Stutzen 133, 123 können ein Ventil aufnehmen und z. B. als Entleerstutzen dienen. Je nach Einbaurichtung der Armatur können der eine, der andere oder beide Stutzen verwendet werden. Nicht benutzte Stutzen werden mit einem Stopfen verschlossen.

Der erste Rohrteil 111 ist durch Hydroformung aus einem Rohrformteil hergestellt worden. Geeignete Werkstoffe für die Rohrformteile sind nichtrostende Edelstahle, z. B. jene mit den Werkstoffnummern 1.4301, 1.4509, 1.4512, 1.4541, 1.4828 oder 1.4401, aber auch Aluminium und seine Legierungen, wie z. B. AlMgSi 0.5 oder AIMg 4.5 Mn, Kupfer und seine Legierungen oder Titan und seine Legierungen. Der erste Rohrteil 111 weist eine gerade zylindrische Form auf, welche sich bei dem vom Leitungsanschluss 110 abgewandten Ende auf einen geringfügig kleineren Durchmesser verengt. An diesem Ende ist der erste Rohrteil 111 durch eine entlang des Umfangs des Rohrs verlaufende Schweissnaht 114 mit dem mittleren Rohrteil 131 verbunden. Der Presswulst 112 wird integral im Hydroformungsprozess hergestellt.

Der zweite Rohrteil 121, ebenfalls durch Hydroformung hergestellt, weist eine abgewinkelte Form mit zwei geraden Schenkeln auf, welche einen Winkel von 90° einschliessen. Der erste Schenkel 121a bildet an seinem freien Ende den Leitungsanschluss 120 und der andere Schenkel 121b an seinem freien Ende den Stutzen 123. Im Winkelbereich weist der Rohrteil 121 auf der Bogenaussenseite eine Abflachung auf, welche zu den Achsen der geraden Abschnitte einen Winkel von jeweils 45° einschliesst. In der Abflachung ist ein kreisförmiger Durchbruch ausgespart. Auf der Aussenseite der Abflachung sind der zweite Rohrteil 121 und der mittlere Rohrteil 131 durch eine weitere, bezüglich des Rohrumfangs des zweiten Rohrteils 121 schräg stehende, Schweissnaht 124 miteinander verbunden.

Der mittlere Rohrteil 131 ist wiederum durch Hydroformung hergestellt worden und ist V-förmig, wobei der Winkel zwischen den beiden Schenkeln 131a, 131b 45° beträgt. Einer der Schenkel 131a ist koaxial zum ersten Rohrteil 111 angeordnet und zum ersten Schenkel 121a des zweiten Rohrteils 121, welcher den Leitungsanschluss 120 bildet. Der andere Schenkel 131b des mittleren Rohrteils 131 bildet den abzweigenden Rohrabschnitt, in welchem die Aufnahme 130 für den Ventiloberteil ausgebildet ist. Im Winkelbereich weist der mittlere Rohrteil 131 auf der Bogenaussenseite eine Abflachung auf, welche senkrecht zur Achse des abzweigenden Schenkels 131b steht und deren Ausdehnung jener der Abflachung des zweiten Rohrteils 121 entspricht. Auch in dieser Abflachung ist ein kreisförmiger Durchbruch ausgespart, wobei dessen Durchmesser demjenigen des Durchbruchs im zweiten Rohrteil 121 entspricht. Nach dem Verschweissen des mittleren Rohrteils 131 mit dem zweiten Rohrteil 121 fluchten die Durchbrüche und bilden so den Fluiddurchlass 150. Dessen Ebene steht senkrecht zur Achse des abzweigenden Schenkels 131b des mittleren Rohrteils 131. Der Durchmesser beider Durchbrüche ist kleiner gewählt als der Durchmesser der Abflachung, so dass ausserhalb der Durchbrüche noch ein ringförmiger flacher Bereich der nach innen gezogenen Abschnitte der Rohrteile 121, 131 verbleibt. Dieser Bereich des mittleren Rohrteils 131, welcher den Fluiddurchlass 150 umgibt, bildet auf seiner Innenseite den Ventilsitz für einen im abzweigenden Schenkel 131b aufgenommenen Ventiloberteil.

Der Ventilsitz kann alternativ auch so ausgebildet werden, dass der nach innen gezogene Abschnitt des zweiten Rohrteils 121 weiter nach innen reicht als derjenige des mittleren Rohrteils 131, dass also der entsprechende Durchbruch einen geringfügig kleineren Querschnitt aufweist. Dadurch ergibt sich ein stufiger Ventilsitz, welcher bei einem passenden Ventilkopf eine verbesserte Abdichtung besonders bei höherem Fluiddruck ermöglicht.

Die Rohrformteile zur Herstellung der Rohrabschnitte und der Hydroformungsprozess sind so gewählt, dass sich beim abzweigenden Rohrteil 131b sowie bei den zusätzlichen Stutzen 133, 123, welche vom mittleren Rohrteil 131 bzw. vom zweiten Rohrteil 121 abzweigen, eine grössere Wandstärke ergibt als in den restlichen Abschnitten des Armaturengehäuses. In die Rohrwände mit der grösseren Wandstärke können Gewinde eingeschnitten werden, welche zum Anbringen von Ventiloberteilen oder Verschlussstopfen dienen können. Werden Feingewinde eingeschnitten, kann die benötigte zusätzliche Wandstärke minimiert werden, wodurch sich der Hydroformungsprozess vereinfachen lässt.

Beim Hydroformen sollte die Lage der längs verlaufenden Schweissnaht der Rohrformteile beachtet werden. Bevorzugt wird die Naht so orientiert, dass darauf beim Umformen die geringsten Kräfte einwirken. Im dargestellten Beispiel ist dies für den zweiten Rohrteil 121 und den mittleren Rohrteil 131 relevant, welche nicht um ihre Achse rotationssymmetrisch sind. Die Orientierung wird in beiden Fällen mit Vorteil so gewählt, dass die Schweissnaht seitlich, d. h. um 90° gedreht zum dargestellten Querschnitt, zu liegen kommt. Es hat sich allerdings bei der praktischen Durchführung des Umformprozesses gezeigt, dass die Längsschweissnaht auch bei einer anderen Orientierung den Belastungen des Umformprozesses gewachsen ist.

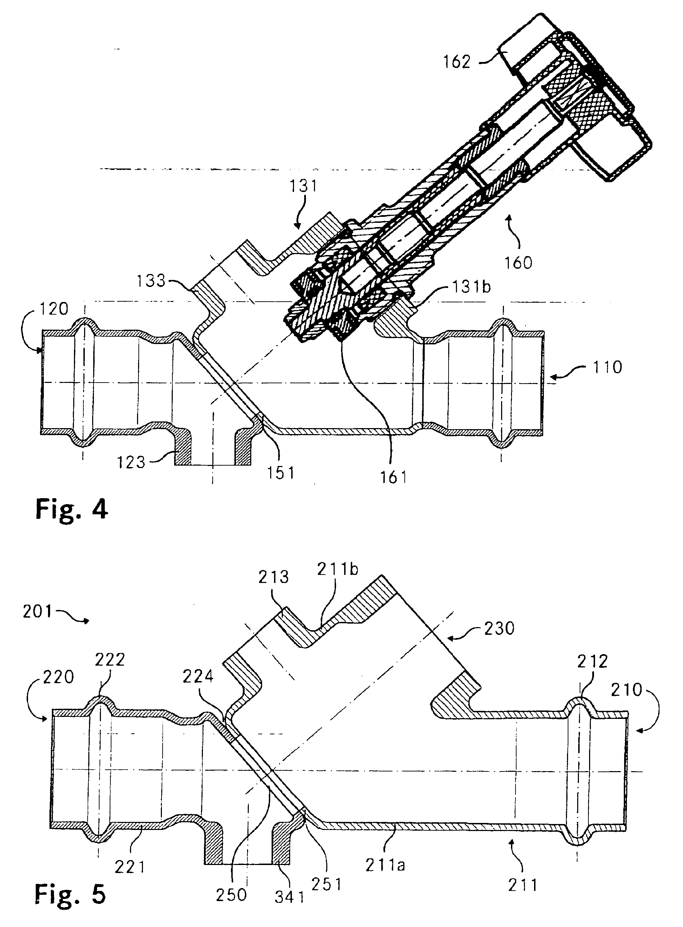

Die Figur 4 zeigt die Armatur mit dem bereits in den Figuren 2 und 3 dargestellten Armaturengehäuse und dem darin eingesetzten Ventiloberteil. Der Ventiloberteil 160 ist in den abzweigenden Schenkel 131b des mittleren Rohrteils 131 eingeschraubt. Es ist in seiner vollständig geöffneten Stellung dargestellt, in welcher das Verschlusselement 161 des Ventiloberteils 160 nur sehr geringfügig in den Fluiddurchlass zwischen den Leitungsanschlüssen 110, 120 hineinragt und so den Fluiddurchgang kaum beeinträchtigt. Es liegt also ein sogenanntes Freiflussventil vor.

Durch Drehen des Handrads 162 des Ventiloberteils 160 kann das Verschlusselement 161 in das Gehäuse hineingeschraubt werden, bis es schliesslich auf dem Ventilsitz 151 aufliegt. In dieser Position ist der Flüssigkeitsdurchgang zwischen den diametralen Leitungsanschlüssen 110, 120 vollständig unterbrochen. Falls der Leitungsanschluss 110 am ersten Rohrteil 111 als Fluideinlass dient, kann der zusätzliche Stutzen 123 am zweiten Rohrteil als Entleerstutzen eingesetzt werden. Dient der Leitungsanschluss 120 am zweiten Rohrteil 121 als Fluideinlass, kann der zusätzliche Stutzen 133 am abzweigenden Schenkel 131 b des mittleren Rohrteils 131 diese Aufgabe erfüllen.

Das dargestellte Ventil dient lediglich als Beispiel. In die beschriebene Armatur können auch anders konstruierte Ventiloberteile eingesetzt werden, welche ein passendes Aussengewinde und ein passendes, mit dem Ventilsitz zusammenwirkendes Verschlusselement aufweisen.

Die Figur 5 ist eine schematische Querschnittsdarstellung einer zweiten Ausführungsform des erfindungsgemässen Armaturengehäuses, mit einem zweiteiligen Aufbau. Die Struktur des Armaturengehäuses 201 entspricht weitgehend derjenigen der ersten Ausführungsform, wie sie in den Figuren 2 und 3 dargestellt ist. Das Armaturengehäuse 201 weist also wiederum zwei diametral angeordnete Leitungsanschlüsse 210, 220 auf, welche mit Presswülsten 212, 222 versehen sind, sowie einen dazwischen angeordneten, abzweigenden Rohrteil zur Aufnahme eines Ventiloberteils. Im Folgenden werden deshalb primär die Unterschiede zur ersten Ausführungsform diskutiert.

Das Armaturengehäuse 201 gemäss der zweiten Ausführungsform ist aus nur zwei Rohrteilen 211 und 221 zusammengesetzt, wobei beide durch Hydroformung hergestellt sind. Der zweite Rohrteil 221 ist identisch mit dem zweiten Rohrteil der ersten Ausführungsform; für ihn gilt entsprechend das oben Gesagte. Der erste Rohrteil 211 erfüllt die Aufgaben sowohl des ersten als auch des dritten, mittleren Rohrteils der ersten Ausführungsform. Seine Form entspricht praktisch identisch derjenigen der zwei zusammengeschweissten Teile. Er ist V-förmig ausgebildet mit zwei Schenkeln 211a, 211b, welche einen Winkel von 45° einschliessen. Der erste der Schenkel 211a weist eine Aussenwulst 212 für eine Pressverbindung mit einem Leitungsrohr auf und ist ansonsten zylindrisch, mit konstantem Querschnitt. Er ist koaxial zum zweiten Rohrteil 221 angeordnet.

Der zweite der Schenkel 211b bildet den abzweigenden Rohrabschnitt, in welchem eine Aufnahme 230 für einen Ventiloberteil gebildet ist. Zu diesem Zweck ist die Wandstärke am freien Ende des abzweigenden Schenkels 211b verstärkt. Im Winkelbereich weist der erste Rohrteil 211 auf der Bogenaussenseite eine Abflachung auf, welche senkrecht zur Achse des abzweigenden Schenkels 211b steht und deren Ausdehnung jener der Abflachung des zweiten Rohrteils 221 entspricht. Wiederum ist ein kreisförmiger Durchbruch ausgespart, dessen Durchmesser dem Durchbruch im zweiten Rohrteil 221 entspricht. Nach dem Verschweissen der beiden Rohrteile 211, 221 fluchten die Durchbrüche und bilden so den Fluiddurchlass 250. Wiederum bildet der Bereich des ersten Rohrteils 211, welcher den Fluiddurchlass 250 umgibt, auf seiner Innenseite den Ventilsitz 251 für den im abzweigenden Schenkel 211b aufgenommenen Ventiloberteil. Am abzweigenden Schenkel 211b des ersten Rohrteils 211 ist wiederum ein zusätzlicher Stutzen 213 angeordnet.

Auf der Aussenseite der Abflachungen sind die zwei Rohrteile 211, 221 durch eine einzige Schweissnaht 224 miteinander verbunden. Die Naht verläuft schräg bezüglich des Rohrumfangs des zweiten Rohrteils 221.

Der Herstellungsaufwand für den ersten Rohrteil 211 ist bei der zweiten Ausführungsform grösser, weil dieser eine kompliziertere Form aufweist. Im Gegenzug können aber das separate Endstück mit dem Pressanschluss sowie eine Schweissnaht eingespart werden.

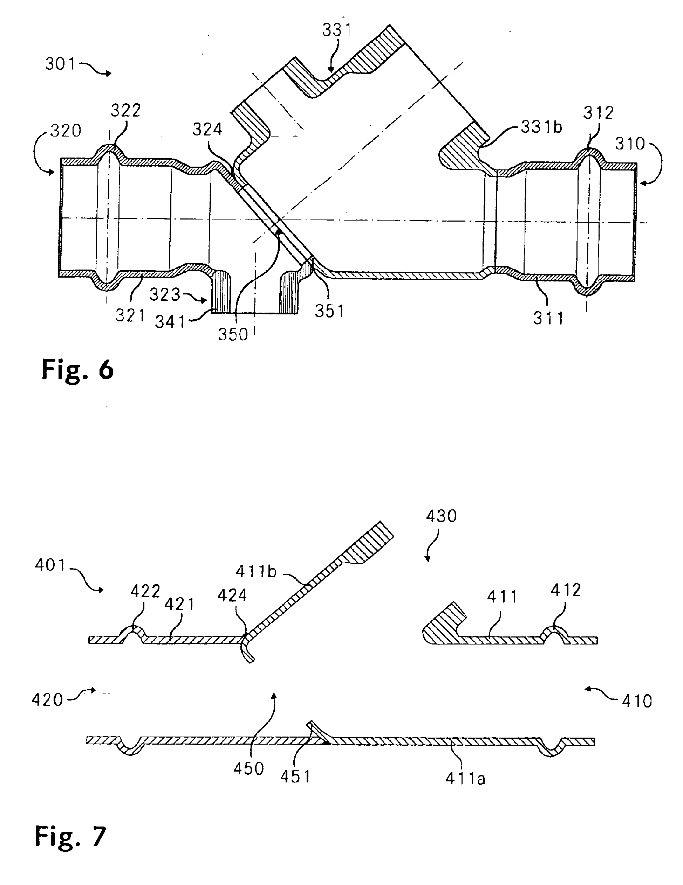

Die Figur 6 ist eine schematische Querschnittsdarstellung einer dritten Ausführungsform des erfindungsgemässen Armaturengehäuses, mit einem vierteiligen Aufbau. Wiederum entspricht die Struktur des Armaturengehäuses 301 weitgehend derjenigen der ersten Ausführungsform, wie sie in den Figuren 2 und 3 dargestellt ist. Das Armaturengehäuse 301 weist also wiederum zwei diametral angeordnete Leitungsanschlüsse 310, 320 auf, welche mit Presswülsten 312, 322 versehen sind, sowie einen dazwischen angeordneten, abzweigenden Rohrteil zur Aufnahme eines Ventiloberteils. Im Folgenden werden deshalb primär die Unterschiede zur ersten Ausführungsform diskutiert.

Das Armaturengehäuse 301 ist aus vier hydrogeformten Teilen zusammengesetzt, nämlich einerseits aus einem ersten Rohrteil 311 und einem mittleren Rohrteil 331, welche identisch den entsprechenden Teilen der ersten Ausführungsform entsprechen, und andererseits aus einem zweiten Rohrteil 321 und einem vierten Rohrteil 341.

Der zweite Rohrteil 321 und der vierte Rohrteil 341 entsprechen zusammen sowohl strukturell als auch funktional dem zweiten Rohrteil der ersten Ausführungsform. Der zweite Rohrteil 321 weist eine im Wesentlichen gerade Form auf mit einem um 45° abgewinkelten und schräg angeschnittenen Endabschnitt. Dieser Endabschnitt weist eine halbkreisförmige Aussparung auf. Nahe des freien, äusseren Endes des zweiten Rohrteils 321 ist wiederum eine Presswulst 322 ausgebildet zur Befestigung eines Leitungsrohrs.

Der vierte Rohrteil 341, welcher den einen zusätzlichen Stutzen 323 bildet, ist aus einem Rohrformteil mit einer grösseren Wandstärke gefertigt als der zweite Rohrteil 321. Auch der vierte Rohrteil 341 weist eine im Wesentlichen gerade Form auf mit einem angeschnittenen Endabschnitt, wobei auch hier der Anschnittwinkel 45° beträgt. Der Endabschnitt weist ebenfalls eine halbkreisförmige Aussparung auf. Diese bildet zusammen mit der Aussparung des zweiten Rohrteils 321 eine kreisförmige Öffnung, den Fluiddurchlass 350. Der zweite Rohrteil 321 und der vierte Rohrteil 341 sind mittels einer Schweissnaht, welche im Wesentlichen in der Verlängerung der Achse des abzweigenden Schenkels 331b des mittleren Rohrteils 331 verläuft, miteinander verbunden. Die verbundenen Rohrteile 321, 341 wiederum sind mittels einer schräg umlaufenden Schweissnaht 324 mit dem mittleren Rohrteil verbunden.

Weil der Ventilsitz 351 ausschliesslich durch die Innenseite des mittleren Rohrteils 331 gebildet wird, hat weder der Aufbau der dahinterliegenden Öffnung und deren Begrenzung aus zwei Rohrteilen noch die zusätzliche Schweissnaht einen Einfluss auf den Ventilsitz 351 selbst. Durch die Aufteilung des zweiten Rohrteils der ersten Ausführungsform in zwei Teile kann aber der Hydroformungsprozess weiter vereinfacht werden. Durch die Wahl einer grösseren Wandstärke des Rohrformteils für den vierten Rohrteil 341 kann auf einfache Weise ein Zusatzstutzen mit einer für das Gewindeschneiden ausreichenden Wanddicke hergestellt werden.

Die gezeigte Aufteilung soll lediglich als Beispiel dienen. Andere (oder weitere) Aufteilungen des Armaturengehäuses können ähnliche Vorteile bieten, insbesondere den Hydroformungsprozess weiter vereinfachen. Die Wahl geeigneter Aufteilungen kann ausserdem den modularen Aufbau von unterschiedlichen Armaturengehäusen erlauben, d. h. die einzelnen Module können in unterschiedlicher Zusammensetzung und Anordnung verschiedene Armaturengehäuse bilden.

Die Figur 7 ist eine schematische Querschnittsdarstellung einer vierten Ausführungsform des erfindungsgemässen Armaturengehäuses. Das Armaturengehäuse 401 weist einen einfacheren Aufbau auf als jenes der ersten bis dritten Ausführungsform, insbesondere sind keine zusätzlichen Stutzen vorhanden.

Wie die bereits beschriebenen Gehäuse weist auch dieses zwei Leitungsanschlüsse 410, 420 auf, welche diametral angeordnet sind. Die Leitungsanschlüsse 410, 420 sind durch hydrogeformte Rohrteile 411, 421 gebildet, welche nahe der freien Rohrenden auf ihrer Aussenseite Presswülste 412, 422 zum Herstellen einer Pressverbindung mit einem eingeschobenen Leitungsrohr aufweisen.

Der erste Rohrteil 411 ist V-förmig ausgebildet mit zwei Schenkeln 411a, 411b, welche einen Winkel von 45° einschliessen. Der erste der Schenkel 411a ist mit Ausnahme des Presswulstes 412 zylindrisch, mit konstantem Querschnitt. Der zweite, abzweigende Schenkel 411b bildet den abzweigenden Rohrabschnitt, in welchem eine Aufnahme 430 für einen Ventiloberteil gebildet ist. Zu diesem Zweck ist die Wandstärke am freien Ende des abzweigenden Schenkels 411b vergrössert. Im Winkelbereich weist der erste Rohrteil 411 auf der Bogenaussenseite eine Abflachung auf, welche senkrecht zur Achse des abzweigenden Schenkels 411b steht. In der Abflachung ist ein kreisförmiger Durchbruch ausgespart, welcher den Fluiddurchlass 450 bildet. Dessen Durchmesser ist so gewählt, dass der verbleibende ringförmige Bereich der Abflachung einen Ventilsitz 451 für einen in die Aufnahme 430 eingesetzten Ventiloberteil bildet.

Der zweite Rohrteil 421 ist mit Ausnahme des Presswulstes 422 zylindrisch, mit einem konstanten Querschnitt, welcher genau dem Querschnitt des ersten Schenkels 411a des ersten Rohrteils 411 entspricht. An seinem inneren Ende ist der zweite Rohrteil 421 schräg angeschnitten, mit einem Anschnittwinkel von ca. 45°. Der zweite Rohrteil 421 ist koaxial zum ersten Rohrteil 411 angeordnet und mit diesem durch eine schräg umlaufende Schweissnaht 424 fluiddicht verbunden. Im Unterschied zu den ersten drei Ausführungsformen ist der zweite Rohrteil 421 nicht nach innen gezogen, sondern stösst mit seinem Ende auf die Aussenfläche des ersten Rohrteils 411.

Der nach innen ragende Ventilsitz 451 kann statt am ersten Rohrteil 411 auch am zweiten Rohrteil 421 angeformt sein. Der erste Rohrteil 411 hat dann ein "gerades" Wandende und bedarf an dieser Stelle keiner nach innen gerichteten Umformung. Dies kann produktionstechnisch von Vorteil sein, weil der zweite Rohrteil 421 insgesamt eine einfachere Form hat als der V-förmige Rohrteil 411.

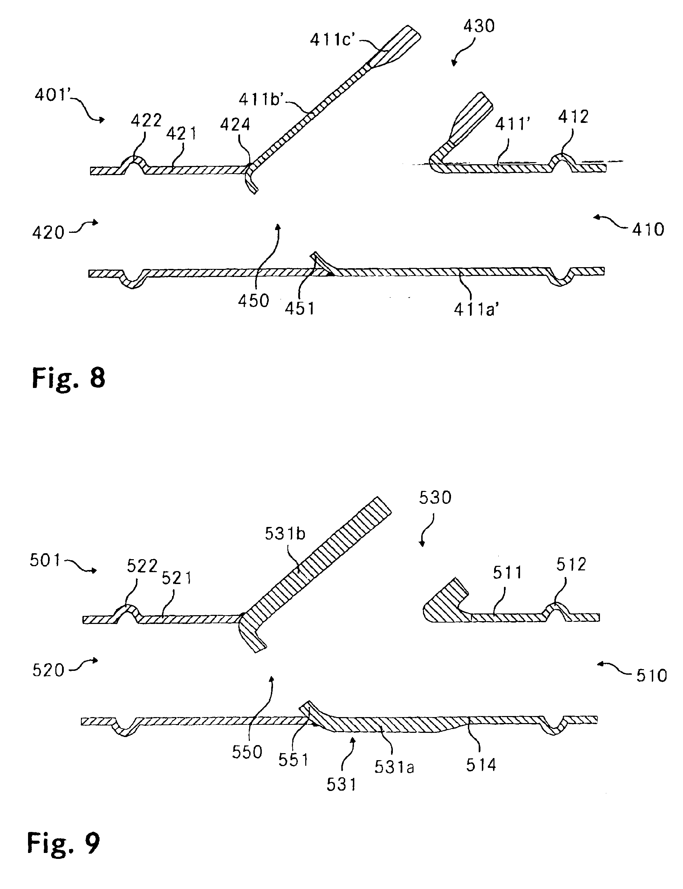

Die Figur 8 ist eine schematische Querschnittsdarstellung einer Variante der vierten Ausführungsform. Das Armaturengehäuse 401' unterscheidet sich von dem in der Figur 7 dargestellten Gehäuse lediglich durch einen unterschiedlich aufgebauten ersten Rohrteil 411'. Dieser weist entlang seiner gesamten Länge dieselbe dünne Wandstärke auf. Der abzweigende Schenkel 411b' ist verkürzt, und an dessen freien Ende ist ein Gewindeteil 411c' angeschweisst. Der Gewindeteil 411c' weist eine grössere Wandstärke auf, so dass ein Gewinde zur Aufnahme eines Ventiloberteils eingeschnitten werden kann. Damit der Gewindeteil 411c' bündig mit dem abzweigenden Schenkel 411b' zusammengefügt werden kann, verjüngt er sich im Verbindungsbereich auf die geringere Wandstärke des ersten Rohrteils 411'.

Der gezeigte Gewindeteil ist für ein Innengewinde vorgesehen, analog lassen sich aber auch Gewindeteile für Aussengewinde an hydrogeformte Rohrabschnitte anfügen. Gewindeteile können auch in Zusatzstutzen für Entleerventile vorgesehen werden; beispielsweise lassen sich in allen hier dargestellten Ausführungsformen der erfindungsgemässen Armatur die Abschnitte, in welchen ein Gewinde ausgeformt werden soll, wahlweise durch angefügte Gewindeteile ersetzen. Anstelle einer Schweissverbindung kann der Gewindeteil auch eingebördelt, aufgeschrumpft oder mit dem abzweigenden Schenkel (metallisch) verklebt werden. Generell lässt sich durch das Anfügen von Gewindeteilen der Aufwand im Hydroformungsprozess vermindern, und es kann durchgehend mit Rohrformteilen geringer Wandstärke gearbeitet werden.

Die Figur 9 ist eine schematische Querschnittsdarstellung einer fünften Ausführungsform des erfindungsgemässen Armaturengehäuses. Die Form entspricht genau derjenigen der vierten Ausführungsform. Das Armaturengehäuse 501 umfasst also wiederum zwei Leitungsanschlüsse 510, 520, welche diametral angeordnet sind. Im Unterschied zur vierten Ausführungsform ist der erste Rohrteil aber in zwei Teile aufgeteilt, das Armaturengehäuse 501 ist also dreiteilig aufgebaut.

Der erste Rohrteil 511 ist im Wesentlichen zylindrisch, mit konstantem Querschnitt. Er weist wiederum nahe seinem freien Ende einen Presswulst 512 auf. Der mittlere Rohrteil 531 ist mit dem anderen Ende des ersten Rohrteils 511 durch eine umlaufende Schweissnaht fluiddicht verbunden. Der mittlere Rohrteil 531 ist V-förmig, mit einem ersten Schenkel 531a, welcher an den ersten Rohrteil 511 in gerader Linie anschliesst und einem zweiten Schenkel 531b, welcher in einem Winkel von 45° abzweigt. Im Winkelbereich weist der mittlere Rohrteil 531 auf der Bogenaussenseite wiederum eine Abflachung auf, welche senkrecht zur Achse des abzweigenden Schenkels 531b steht. In der Abflachung ist ein kreisförmiger Durchbruch ausgespart, welcher den Fluiddurchlass 550 bildet und dessen umgebender, ringförmiger Bereich den Ventilsitz 551 für einen in die Aufnahme 530 eingesetzten Ventiloberteil bildet.

Damit im abzweigenden Schenkel 531b ein Gewinde für eine Ventilaufnahme eingeschnitten werden kann, ist der mittlere Rohrteil 531 aus einem Rohrformteil mit einer grösseren Wandstärke hergestellt. Im Anschlussbereich zum ersten Rohrteil 511 verjüngt sich die Rohrwand auf ihrer Aussenseite, so dass ein bündiger Abschluss ermöglicht wird. Die Verjüngung kann durch den Umformprozess oder aber durch eine konventionelle, spanende Nachbearbeitung hergestellt werden.

Der zweite Rohrteil 521 mit dem Presswulst 522 und die Verbindung mit dem V-förmigen Teil sind identisch mit der vierten Ausführungsform.

Die Erfindung beschränkt sich nicht auf die dargestellten Ausführungsbeispiele. Merkmale verschiedener Ausführungsformen können miteinander kombiniert werden, beispielsweise was die Aufteilung des Armaturengehäuses in hydrogeformte Teile betrifft oder die Wahl der Wandstärken dieser Teile. Anstelle eines Veritiloberteils kann beispielsweise auch ein Rückflussverhinderer eingesetzt werden, bei welchem ein Verschlusselement durch eine Feder auf den Ventilsitz gedrückt wird, so dass kein Rückfluss vom ersten zum zweiten Leitungsanschluss möglich ist. Auch ein kombinierter Rückflussverhinderer lässt sich mit dem erfindungsgemässen Armaturengehäuse auf einfache Weise herstellen, indem eines der an die Leitungsanschlüsse anschliessenden Rohre länger ausgebildet wird und darin ergänzend zum Ventil ein Rückflussverhinderereinsatz angeordnet wird. Wie erwähnt, können auch Armaturengehäuse mit anderer Form hergestellt werden, beispielsweise ein Armaturengehäuse für ein Geradsitzventil.

Die Presswülste zum Anbringen der Leitungsrohre mittels Pressverbindungen sind nicht zwingend. Sie können beispielsweise durch Innen- oder Aussengewinde oder durch Klemmanschlüsse ersetzt werden. Alternativ werden an der Armatur gar keine Anschlussmittel angeordnet und das Verbinden mit den Leitungsrohren erfolgt über handelsübliche Fittinge.

Zusammenfassend ist festzustellen, dass durch die Erfindung eine Armatur geschaffen wird, welche kostengünstig, einfach aufgebaut und vielseitig einsetzbar ist.

## Patentansprüche

1. Armatur mit einem Ventil für die Kontrolle eines Fluids in einem Leitungssystem, insbesondere ein Absperrventil, ein Regelventil, ein Rückflussverhinderer oder ein Zirkulationsventil, mit einem Gehäuse (101; 201; 301; 401; 501), insbesondere aus Edelstahl, mit mindestens zwei Leitungsanschlüssen (110, 120; 210, 220; 310, 320; 410, 420; 510, 520) wobei ein Ventilsitz (151; 251; 351; 451; 551) des Ventils direkt am Gehäuse (101; 201; 301; 401; 501) ausgeformt ist, wobei das Gehäuse (101; 201; 301; 401; 501) durch mindestens zwei Teile (111, 121, 131; 211, 221; 311, 321, 331, 341; 411, 421; 511, 521, 531) gebildet ist, die fluiddicht zusammengefügt, insbesondere geklebt, gebördelt oder aufgeschrumpft, bevorzugt verschweisst, sind, **dadurch gekennzeichnet, dass** die mindestens zwei Teile (111, 121, 131; 211, 221; 311, 321, 331, 341; 411, 421; 511, 521, 531) durch Hydroformung aus Rohrformteilen hergestellt sind und dass einer der mindestens zwei Teile (111, 121, 131; 211, 221; 311, 321, 331, 341; 411, 421; 511, 521, 531) einen Durchbruch (150; 250; 350; 450; 550) in einer Rohrwand aufweist, wobei eine Umrandung des Durchbruchs (150; 250; 350; 450; 550) den Ventilsitz (151; 251; 351; 451; 551) bildet.

2. Armatur nach Anspruch 1, **dadurch gekennzeichnet, dass** der Ventilsitz (151; 251; 351; 451; 551) bei einer Verbindungsstelle der mindestens zwei Teile (111, 121, 131; 211, 221; 311, 321, 331, 341; 411, 421; 511, 521, 531) angeordnet ist.

3. Armatur nach Anspruch 1 oder 2, **dadurch gekennzeichnet, dass** der Ventilsitz (151; 251; 351; 451; 551) durch einen nach innen gezogenen Abschnitt eines der mindestens zwei hydrogeformten Teile (111, 121, 131; 211, 221; 311, 321, 331, 341; 411, 421; 511, 521, 531) gebildet ist.

4. Armatur nach einem der Ansprüche 1 bis 3, **dadurch gekennzeichnet, dass** ein durch die Hydroformung erzeugtes Verbindungselement (112, 122; 212, 222; 312, 322; 412, 422; 512; 522) für eine Rohrleitung, insbesondere ein Presswulst für eine Pressverbindung, direkt an einem der mindestens zwei Teile (111, 121, 131; 211, 221; 311, 321, 331, 341; 411, 421; 511, 521, 531) ausgeformt ist.

5. Armatur nach einem der Ansprüche 1 bis 4, **dadurch gekennzeichnet, dass** sie zwei diametral angeordnete Leitungsanschlüsse (110, 120; 210, 220; 310, 320; 410, 420; 510, 520) umfasst und einen dazwischen angeordneten, abzweigenden Rohrteil (131b; 211b; 331b; 411b; 531b) zur Aufnahme eines Ventiloberteils (160).

6. Armatur nach Anspruch 5, **dadurch gekennzeichnet, dass** der abzweigende Rohrteil (131b; 211b; 331b; 411b; 531b) einen Schrägsitz für den Ventiloberteil (160) bildet.

7. Armatur nach Anspruch 5 oder 6, **dadurch gekennzeichnet, dass** das Gehäuse (201; 401) aus genau zwei Teilen (211, 221; 411, 421) gebildet ist, wobei ein erster Teil (211; 411) einen ersten der Leitungsanschlüsse (210; 410) und den abzweigenden Rohrteil (211b; 411b) und ein zweiter Teil (221; 421) einen zweiten der Leitungsanschlüsse (220; 420) bildet.

8. Armatur nach Anspruch 5 oder 6, **dadurch gekennzeichnet, dass** das Gehäuse (101; 501) aus genau drei Teilen (111, 121, 131; 511, 521, 531) gebildet ist, wobei ein erster Teil (111; 511) einen ersten der Leitungsanschlüsse (110, 510), ein zweiter, mittlerer Teil (131; 531) den abzweigenden Rohrteil (131b; 531b) und ein dritter Teil (121; 521) einen zweiten der Leitungsanschlüsse (120; 520) bildet.

9. Armatur nach Anspruch 5 oder 6, **dadurch gekennzeichnet, dass** das Gehäuse (301) aus genau vier Teilen (311, 321, 331, 341) gebildet ist, wobei ein erster Teil (311) einen ersten der Leitungsanschlüsse (310), ein zweiter, mittlerer Teil (331) den abzweigenden Rohrteil (331b), ein dritter Teil (321) einen zweiten der Leitungsanschlüsse (320) und ein vierter Teil (341) einen zusätzlichen Stutzen (323) bildet.

10. Armatur nach einem der Ansprüche 1 bis 9, **dadurch gekennzeichnet, dass** ein erster der mindestens zwei Teile (511, 521) aus einem Rohr einer ersten Wandstärke und ein zweiter der mindestens zwei Teile (531) aus einem Rohr einer zweiten, unterschiedlichen Wandstärke durch Hydroformung hergestellt sind.

11. Armatur nach einem der Ansprüche 1 bis 10, **dadurch gekennzeichnet, dass** ein Gewindeteil (411c') zum Einschneiden eines Gewindes an einen der mindestens zwei Teile (411',421) fluiddicht angefügt, insbesondere angeklebt, gebördelt oder aufgeschrumpft, bevorzugt angeschweisst, ist.

12. Gehäuse für eine Armatur gemäss einem der Ansprüche 1 bis 11, welches durch mindestens zwei Teile (111, 121, 131; 211, 221; 311, 321, 331, 341; 411, 421; 511, 521, 531), insbesondere aus Edelstahl, gebildet ist, die fluiddicht zusammengefügt, insbesondere geklebt, gebördelt oder aufgeschrumpft, bevorzugt verschweisst, sind, und dass ein Ventilsitz (151; 251; 351; 451; 551) direkt an einem der mindestens zwei Teile (111, 121, 131; 211, 221; 311, 321, 331, 341; 411, 421; 511, 521, 531) ausgeformt ist, **dadurch gekennzeichnet, dass** die mindestens zwei Teile (111, 121, 131; 211, 221; 311, 321, 331, 341; 411, 421; 511, 521, 531) durch Hydroformung hergestellt sind und dass einer der mindestens zwei Teile (111, 121, 131; 211, 221; 311, 321, 331, 341; 411, 421; 511, 521, 531) einen Durchbruch (150; 250; 350; 450; 550) in einer Rohrwand aufweist, wobei eine Umrandung des Durchbruchs (150; 250; 350; 450; 550) den Ventilsitz (151; 251; 351; 451; 551) bildet.

13. Verfahren zur Herstellung einer Armatur gemäss einem der Ansprüche 1 bis 11, **dadurch gekennzeichnet, dass** zur Herstellung eines Gehäuses (101; 201; 301; 401; 501), insbesondere aus Edelstahl, mit mindestens zwei Leitungsanschlüssen (110, 120; 210, 220; 310, 320; 410, 420; 510, 520) mindestens zwei Teile (111, 121, 131; 211, 221; 311, 321, 331, 341; 411, 421; 511, 521, 531) durch Hydroformung hergestellt werden, dass ein Durchbruch (150; 250; 350; 450; 550) in einer Rohrwand eines der hydrogeformten Rohrformteile hergestellt wird, wobei eine Umrandung des Durchbruchs (150; 250; 350; 450; 550) einen Ventilsitz (151; 251; 351; 451; 551) bildet, der direkt an einem der zwei Teile (131; 211; 331; 411; 531) ausgeformt ist, und dass anschliessend die mindestens zwei Teile (111, 121, 131; 211, 221; 311, 321, 331, 341; 411, 421; 511, 521, 531) fluiddicht zusammengefügt, insbesondere geklebt, gebördelt oder aufgeschrumpft, bevorzugt verschweisst, werden.

## Claims

1. Fitting having a valve for controlling a fluid in a pipeline system, in particular a closure valve, a control valve, a non-return valve or a circulation valve, having a housing (101; 201; 301; 401; 501), in particular constructed from high-grade steel, having at least two pipe connections (110, 120; 210, 220; 310, 320; 410, 420; 510, 520), with a valve seat (151; 251; 351; 451; 551) of the valve being formed directly on the housing (101; 201; 301; 401; 501), the housing (101; 201; 301; 401; 501) being formed by at least two portions (111, 121, 131; 211, 221; 311, 321, 331, 341; 411, 421; 511, 521, 531) which are joined together in a fluid-tight manner, in particular adhesively bonded, crimped or shrunk on, preferably welded, **characterised in that** the at least two portions (111, 121, 131; 211, 221; 311, 321, 331, 341; 411, 421; 511, 521, 531) are produced by hydroforming from formed pipe portions and **in that** one of the at least two portions (111, 121, 131; 211, 221; 311, 321, 331, 341; 411, 421; 511, 521, 531) has an opening (150; 250; 350; 450; 550) in a pipe wall, an edge of the opening (150; 250; 350; 450; 550) forming the valve seat (151; 251; 351; 451; 551).

2. Fitting according to Claim 1, **characterised in that** the valve seat (151; 251; 351; 451; 551) is arranged at a connection location of the at least two portions (111, 121, 131; 211, 221; 311, 321, 331, 341; 411, 421; 511, 521, 531).

3. Fitting according to Claim 1 or 2, **characterised in that** the valve seat (151; 251; 351; 451; 551) is formed by an inwardly drawn portion of one of the at least two hydroformed portions (111, 121, 131; 211, 221; 311, 321, 331, 341; 411, 421; 511, 521, 531).

4. Fitting according to any one of claims 1 to 3, **characterised in that** a pipeline connection element (112, 122; 212, 222; 312, 322; 412, 422; 512; 522), which is produced by the hydroforming operation, in particular a compression bead for a compression connection, is formed directly on one of the at least two portions (111, 121, 131; 211, 221; 311, 321, 331, 341; 411, 421; 511, 521, 531).

5. Fitting according to any one of Claims 1 to 4, **characterised in that** it comprises two diametrically arranged pipe connections (110, 120; 210, 220; 310, 320; 410, 420; 510, 520) and a branching pipe portion (131b; 211b; 331b; 411b; 531b), which is arranged therebetween, for receiving an upper valve portion (160).

6. Fitting according to Claim 5, **characterised in that** the branching pipe portion (131b, 211b; 331b; 411b; 531b) forms an inclined seat for the upper valve portion (160).

7. Fitting according to Claim 5 or 6, **characterised in that** the housing (201; 401) is formed from precisely two portions (211, 221; 411, 421), a first portion (211; 411) forming a first one of the pipe connections (210; 410) and the branching pipe portion (211b; 411b), and a second portion (221; 421) forming a second one of the pipe connections (220; 420).

8. Fitting according to Claim 5 or 6, **characterised in that** the housing (101; 501) is formed from precisely three portions (111, 121, 131; 511, 521, 531), a first portion (111; 511) forming a first one of the pipe connections (110, 510), a second central portion (131; 531) forming the branching pipe portion (131b; 531b), and a third portion (121; 521) forming a second one of the pipe connections (120; 520).

9. Fitting according to Claim 5 or 6, **characterised in that** the housing (301) is formed from precisely four portions (311, 321, 331, 341), a first portion (311) forming a first one of the pipe connections (310), a second central portion (331) forming the branching pipe portion (331b), a third portion (321) forming a second one of the pipe connections (320), and a fourth portion (341) forming an additional connecting piece (323).

10. Fitting according to any one of Claims 1 to 9, **characterised in that** a first one of the at least two portions (511, 521) is produced from a pipe having a first wall thickness and a second one of the at least two portions (531) is produced from a pipe having a second different wall thickness by hydroforming.

11. Fitting according to any one of claims 1 to 10, **characterised in that** a threaded portion (411c') for cutting a thread is joined to one of the at least two portions (411', 421) in a fluid-tight manner, in particular adhesively bonded, crimped or shrunk on, preferably welded.

12. Housing for a fitting according to any one of Claims 1 to 11, which is formed by at least two portions (111, 121, 131; 211, 221; 311, 321, 331, 341; 411, 421; 511, 521, 531), in particular of high-grade steel, which are joined together in a fluid-tight manner, in particular adhesively bonded, crimped or shrunk on, preferably welded, and in that a valve seat (151; 251; 351; 451; 551) is formed directly on one of the at least two portions (111, 121, 131; 211, 221; 311, 321, 331, 341; 411, 421; 511, 521, 531), **characterised in that** the at least two portions (111, 121, 131; 211, 221; 311, 321, 331, 341; 411, 421; 511, 521, 531) are produced by hydroforming, and **in that** one of the at least two portions (111, 121, 131; 211, 221; 311, 321, 331, 341; 411, 421; 511, 521, 531) has an opening (150; 250; 350; 450; 550) in a pipe wall, an edge of the opening (150; 250; 350; 450; 550) forming the valve seat (151; 251; 351; 451; 551).

13. Method for producing a fitting according to any one of Claims 1 to 11, **characterised in that**, in order to produce a housing (101; 201; 301; 401; 501), in particular of high-grade steel, having at least two pipe connections (110, 120; 210, 220; 310, 320; 410, 420; 510, 520), at least two portions (111, 121, 131; 211, 221; 311, 321, 331, 341; 411, 421; 511, 521, 531) are produced by hydroforming, **in that** an opening (150; 250; 350; 450; 550) is produced in a pipe wall of one of the hydroformed formed pipe portions, an edge of the opening (150; 250; 350; 450; 550) forming a valve seat (151; 251; 351; 451; 551) which is formed directly on one of the two portions (131; 211; 331; 411; 531), and **in that** the at least two portions (111, 121, 131; 211, 221; 311, 321, 331, 341; 411, 421; 511, 521, 531) are subsequently joined together in a fluid-tight manner, in particular adhesively bonded, crimped or shrunk on, preferably welded.

## Revendications

1. Pièce de robinetterie comportant une valve pour contrôler un fluide dans un système de tuyauterie, en particulier une valve d'arrêt, une valve de régulation, un dispositif anti-retour ou une valve de circulation, comportant un carter (101 ; 201 ; 301 ; 401 ; 501), en particulier en acier spécial, pourvu d'au moins deux raccords de branchement (110, 120 ; 210; 220 ; 310, 320 ; 410, 420 ; 510, 520), un siège de valve (151 ; 251 ; 351 ; 451 ; 551) de la valve étant conformé directement sur le carter (101 ; 201 ; 301 ; 401 ; 501), le carter (101 ; 201 ; 301 ; 401 ; 501) étant formé par au moins deux parties (111, 121, 131 ; 211, 221 ; 311, 321, 331, 341 ; 411, 421 ; 511, 521, 531) qui sont assemblées de façon étanche aux fluides, en particulier par collage, rabattement ou frettage, de préférence par soudage, **caractérisé en ce que** lesdites au moins deux parties (111, 121, 131 ; 211, 221 ; 311, 321, 331, 341 ; 411, 421 ; 511, 521, 531) sont réalisées par hydroformage à partir de pièces préformées tubulaires et **en ce que** l'une desdites au moins deux parties (111, 121, 131 ; 211, 221 ; 311, 321, 331, 341 ; 411, 421 ; 511, 521, 531) présente une traversée (150 ; 250 ; 350 ; 450 ; 550) dans une paroi tubulaire, un rebord de la traversée (150 ; 250 ; 350 ; 450 ; 550) formant le siège de valve (151 ; 251 ; 351 ; 451 ; 551).

2. Pièce de robinetterie selon la revendication 1, **caractérisée en ce que** le siège de valve (151 ; 251; 351 ; 451 ; 551) est agencé à un emplacement de liaison desdites au moins deux parties (111, 121, 131 ; 211, 221 ; 311, 321, 331, 341 ; 411, 421 ; 511, 521, 531).

3. Pièce de robinetterie selon la revendication 1 ou 2, **caractérisée en ce que** le siège de valve (151 ; 251; 351 ; 451 ; 551) est formé par un tronçon tiré vers l'intérieur de l'une desdites au moins deux parties hydroformées (111, 121, 131 ; 211, 221 ; 311, 321, 331, 341 ; 411, 421 ; 511, 521, 531).

4. Pièce de robinetterie selon l'une des revendications 1 à 3, **caractérisée en ce qu'**un élément de liaison (112, 122 ; 212, 222 ; 312, 322 ; 412, 422 ; 512; 522) généré par hydroformage pour une tuyauterie, en particulier un bourrelet de pressage pour une liaison pressée, est conformé directement sur l'une desdites au moins deux parties (111, 121, 131 ; 211, 221 ; 311, 321, 331, 341 ; 411, 421 ; 511, 521, 531).

5. Pièce de robinetterie selon l'une des revendications 1 à 4, **caractérisée en ce qu'**elle comprend deux raccords de branchement (110, 120 ; 210; 220 ; 310, 320 ; 410, 420 ; 510, 520) disposés diamétralement et une partie tubulaire interposée de ramification (131b ; 211b ; 331b ; 411b ; 531b) pour loger une partie supérieure de valve (160).

6. Pièce de robinetterie selon la revendication 5, **caractérisée en ce que** la partie tubulaire de ramification (131b ; 211b ; 331b ; 411b ; 531b) forme un siège oblique pour la partie supérieure de valve (160).

7. Pièce de robinetterie selon la revendication 5 ou 6, **caractérisée en ce que** le carter (201 ; 401) est formé à partir de précisément deux parties (211, 221 ; 411, 421), une première partie (211 ; 411) formant un premier des raccords de branchement (210 ; 410) et la partie tubulaire de ramification (211b ; 411b), et une seconde partie (221 ; 421) formant un second des raccords de branchement (220 ; 420).

8. Pièce de robinetterie selon la revendication 5 ou 6, **caractérisée en ce que** le carter (101 ; 501) est formé à partir de précisément trois parties (111, 121, 131 ; 511, 521, 531), une première partie (111 ; 511) formant un premier des raccords de branchement (110 ; 510), une seconde partie médiane (131 ; 531) formant la partie tubulaire de ramification (131b ; 531b), et une troisième partie (121 ; 521) formant un second des raccords de branchement (120 ; 520).

9. Pièce de robinetterie selon la revendication 5 ou 6, **caractérisée en ce que** le carter (301) est formé à partir de précisément quatre parties (311, 321, 331, 341), une première partie (311) formant un premier des raccords de branchement (310), une seconde partie médiane (331) formant la partie tubulaire de ramification (331b), une troisième partie (321) formant un second des raccords de branchement (320) et une quatrième partie (341) formant un manchon supplémentaire (323).

10. Pièce de robinetterie selon l'une des revendications 1 à 9, **caractérisée en ce qu'**une première desdites au moins deux parties (511, 521) est réalisée par hydroformage à partir d'un tube présentant une première épaisseur de paroi, et une seconde desdites au moins deux parties (531) est réalisée par hydroformage à partir d'un tube présentant une seconde épaisseur de paroi différente.

11. Pièce de robinetterie selon l'une des revendications 1 à 10, **caractérisée en ce qu'**une partie à pas de vis (411c') pour tailler un pas de vis est rapportée de façon étanche aux fluides, en particulier par collage, rabattement ou frettage, de préférence par soudage, sur l'une desdites au moins deux parties (411', 421).

12. Carter pour une pièce de robinetterie selon l'une des revendications 1 à 11, qui est formé à partir d'au moins deux parties (111, 121, 131 ; 211, 221 ; 311, 321, 331, 341 ; 411, 421 ; 511, 521, 531), en particulier en acier spécial, qui sont assemblées de façon étanche aux fluides, en particulier par collage, rabattement ou frettage, de préférence par soudage, et en ce qu'un siège de valve (151 ; 251 ; 351 ; 451 ; 551) est conformé directement sur l'une desdites au moins deux parties (111, 121, 131 ; 211, 221 ; 311, 321, 331, 341 ; 411, 421 ; 511, 521, 531), **caractérisé en ce que** lesdites au moins deux parties (111, 121, 131 ; 211, 221 ; 311, 321, 331, 341 ; 411, 421 ; 511, 521, 531) sont réalisées par hydroformage, et **en ce que** l'une desdites au moins deux parties (111, 121, 131 ; 211, 221 ; 311, 321, 331, 341 ; 411, 421 ; 511, 521, 531) présente une traversée (150 ; 250 ; 350 ; 450 ; 550) dans une paroi tubulaire, un rebord de la traversée (150 ; 250 ; 350 ; 450 ; 550) formant le siège de valve (151 ; 251 ; 351 ; 451 ; 551).

13. Procédé pour réaliser une pièce de robinetterie selon l'une des revendications 1 à 11, **caractérisée en ce que**, pour réaliser un carter (101 ; 201 ; 301 ; 401 ; 501), en particulier en acier spécial, comportant au moins deux raccords de branchement (110, 120 ; 210; 220 ; 310, 320 ; 410, 420 ; 510, 520), on réalise au moins deux parties (111, 121, 131 ; 211, 221 ; 311, 321, 331, 341 ; 411, 421 ; 511, 521, 531) par hydroformage, **en ce que** l'on réalise une traversée (150 ; 250 ; 350 ; 450 ; 550) dans une paroi tubulaire de l'une des parties préformées tubulaires hydroformées, un rebord de la traversée (150 ; 250 ; 350 ; 450 ; 550) formant le siège de valve (151 ; 251 ; 351 ; 451 ; 551) qui est conformé directement sur l'une des deux parties (131 ; 211 ; 331 ; 411 ; 531), et **en ce qu'**ensuite lesdites au moins deux parties (111, 121, 131 ; 211, 221 ; 311, 321, 331, 341 ; 411, 421 ; 511, 521, 531) sont assemblées de façon étanche aux fluides, en particulier par collage, rabattement ou frettage, de préférence par soudage.
